# EUROPEAN PATENT SPECIFICATION

(11) **EP 3 574 284 B1**
(45) Date of publication and mention of the grant of the patent: **13.09.2023**
(21) Application number: 18706305.2
(22) Date of filing: 24.01.2018
(51) Int. Cl.: G01B 11/06, A61C 7/08, B29C 51/46, G01B 11/24

(54) **METHOD OF MEASURING THE THICKNESS OF DEVICES OBTAINED BY THERMOFORMING**
VERFAHREN ZUR MESSUNG DER DICKE VON DURCH THERMOFORMEN ERHALTENEN VORRICHTUNGEN
PROCÉDÉ DE MESURE DE L'ÉPAISSEUR DE DISPOSITIFS OBTENUS PAR THERMOFORMAGE

(30) Priority: 25.01.2017 IT 201700008019
(43) Date of publication of application: 04.12.2019
(73) Proprietor: Airnivol S.p.A., 56023 Navacchio Di Cascina (PI) (IT)
(72) Inventor: BARONE, Sandro, I-56125 Pisa (IT); PAOLI, Alessandro, I-55100 Lucca (IT); RAZIONALE, Armando Viviano, I-56021 Cascina (IT)
(74) Representative: De Ros, Alberto
(86) International application number: PCT/IB2018/050429
(87) International publication number: WO 2018/138650

(56) References cited:
- EP-A1- 2 991 034
- KR-B1- 101 173 548
- US-A1- 2011 003 025
- US-A1- 2016 175 068

## Description

The present invention relates to a method for measuring the thickness of devices obtained by thermoforming. In particular, the present invention relates to a method for measuring the thickness of orthodontic dental devices obtained by thermoforming processes, such as orthodontic braces for incremental dental repositioning, bites, occlusal guides and so on.

In recent years, orthodontic devices have become increasingly popular, also known simply as "dental devices", of the transparent or invisible type, used in place of traditional orthodontic appliances of the fixed or mobile type.

Compared to conventional orthodontic appliances, invisible devices do not require the placement of platelets and/or metal arches on the teeth, such as those typical of a fixed device. In this way, in addition to making it easier to apply the appliance, the aesthetic appearance of the patient during treatment remains unaltered. Moreover, compared to fixed appliances, it is easy to maintain a good level of dental hygiene, as it is possible to remove the appliances for a deeper cleaning of both the teeth and the appliances themselves.

In general, an orthodontic treatment using invisible devices involves the design of a set of transparent masks that can be fitted on the arch to be treated starting from a conformation complementary to a dental arch substantially similar to the initial one, until reaching a conformation complementary to the desired arch, passing through a plurality of intermediate conformations. Each mask designed for the treatment plan has the purpose of bringing the arch to the next arrangement and, in this way, move the individual teeth of the arch in an incremental and therefore gradual manner from an initial to the final arrangement.

A currently widely used methodology of production of masks involves the use of thermoforming processes of a thermoplastic sheet on a positive mold of the corresponding dental arch, initial, intermediate or final depending on the specific mask to be produced.

Subsequently to the production of the masks by thermoforming, it is necessary to check the thickness of the final thermoformed product in order to verify the quality and possibly proceed to discard masks having globally or even locally a thickness different from the design one. In fact, the thermoforming process offers limited control over the thickness of the finished product and therefore requires that appropriate checks be carried out downstream of the production process.

The measurement of the thickness of objects obtained through thermoforming processes is however complex, above all due to the reduced thickness of the resulting object. A measurement technique currently available is computerized "micro-tomography" which allows acquiring the thickness of even thin objects with high accuracy. However, as it is a radiographic technique, it involves problems related to costs and the availability of measuring instruments.

In light of the foregoing, the Applicant has set itself the goal of devising a measurement method that allows measuring the thickness in several points of objects obtained by thermoforming processes in a quick, simple and reliable way, through easily accessible equipment. In fact, only in a first approximation the thickness of a thermoformed object is uniform; in particular, thermoforming very faithful to the positive mold leads to obtain a thermoformed object with a thickness that is not completely uniform and not uniform everywhere.

According to a first aspect thereof, the invention therefore relates to a method for measuring the thickness of devices (in particular orthodontic dental devices) obtained by thermoforming a sheet of thermoplastic material on a positive mold, characterized in that it comprises the steps consisting in:
- inserting a plurality of reference targets onto the positive mold, prior to the image acquisition and model derivation steps;
- acquiring a plurality of images of the device obtained by thermoforming in configuration fitted on the positive mold and deriving therefrom a three-dimensional digital model of the assembly consisting of the positive mold and the device obtained by thermoforming fitted on the same;
- acquiring a plurality of images of the positive mold in the absence of the fitted thermoformed device and deriving therefrom a three-dimensional digital model of the positive mold alone;
- aligning the acquired three-dimensional digital models; and subsequently
- comparing the aligned three-dimensional digital models and calculating thicknesses of the thermoformed device on the basis of the differences detected by the comparison.

It should be noted that the first two steps can be inverted with equivalent result.

The Applicant has found that, through the simple procedure of acquiring the images of the thermoformed product fitted on the positive model and the model only, it is possible to derive the three-dimensional digital models of the two configurations and, from these, the thickness of the thermoformed device in various points thereof by comparing the derived models; it is therefore a plurality of thicknesses.

From the patent document published as US2011003025A1, a method is known for controlling the thermoforming of a dental device which interrupts the thermoforming operation when an optical sensor detects the achievement of a certain thickness of the thermoformed device. This document implicitly assumes that it is sufficient to detect the thickness in a single point of the thermoformed device (apparently next to the mold or on the side of a tooth), that this thickness decreases over time and remains fixed from the moment in which the thermoforming operation is interrupted; but these assumptions are not correct and in any case are reductive.

Advantageously, the technique according to the present invention does not require the use of sophisticated instruments. The acquisition of the images and the subsequent derivation of the respective three-dimensional digital models can in fact be made by means of instruments that are more easily accessible both in terms of availability and in terms of costs, such as for example an optical or laser scanner. Moreover, the acquisition of the images and the subsequent derivation of the respective three-dimensional digital models must not be done on board the thermoforming machine (of course, it is also possible to design a thermoforming machine which implements the method according to the present invention).

Moreover, the Applicant has found that the resolution of the measurement is comparable to that offered by the detections currently performed by means of micro computed tomography, providing a map of the thickness of the device at each point with a resolution of at least 10 µm.

Therefore, the measurement method according to the invention allows quickly and easily obtaining an evaluation of the thickness of the thermoformed device sufficiently precise to be used for subsequent analyses relating to the quality of the product or for the creation of realistic digital models thereof, usable for example for structural analyses such as finite element analysis.

The present invention may have at least one of the following preferred features; the latter may in particular be combined with each other as desired to meet specific application requirements.

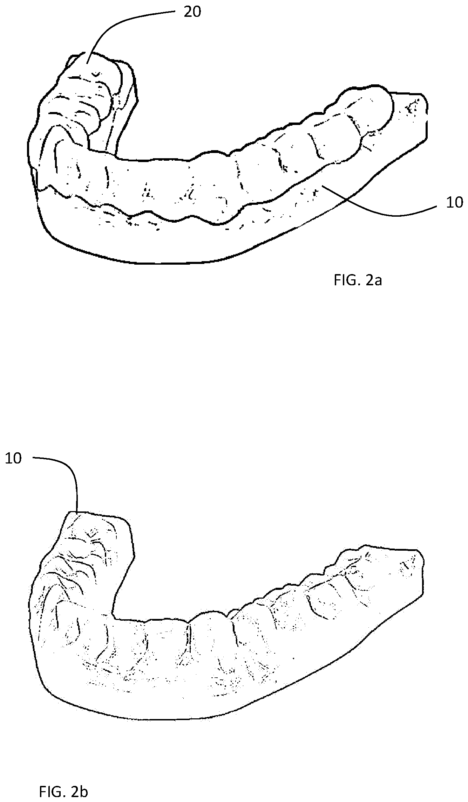

Typically and advantageously, both as regards the device obtained by thermoforming in configuration fitted on the positive mold and as regards the positive mold, only outer surfaces are acquired (see Fig. 2a and Fig. 2b), and this allows considerable accuracy and ease of acquisition and ease of comparison of the two three-dimensional models; in fact, if the positive mold is held steady during the whole time ranging from the beginning of the first acquisitions of images to the end of the second acquisitions of images, the two three-dimensional models are already aligned or easily aligned. The acquisition of outer surfaces alone is possible if, depending on the case, correct thermoforming, correct removal of the thermoformed device is and correct fitting of the thermoformed device are carried out, keeping the positive mold still.

From the patent document published as KR101173548B1, a method is known for verifying a thermoformed device in which outer surfaces and inner surfaces of the thermoformed device are acquired. However, the acquisition of inner surfaces is critical because parts of these surfaces may not be clearly visible. Furthermore, aligning the two three-dimensional models deriving from two groups of unrelated acquisitions (i.e. those relating to the outside and those relating to the inside of the thermoformed device) to one another is critical.

Moreover, according to the present invention, typically only upper surfaces are acquired, since the positive mold is positioned with the teeth facing upwards (see Fig. 2a and Fig. 2b).

Preferably, the comparison step between the two three-dimensional digital models comprises obtaining point by point distances between the two models, the thicknesses of the device coinciding with the distances obtained.

It should be noted that for each point of the three-dimensional model of the positive mold (appropriately selected), we can consider, for example, a point of the other three-dimensional model having minimum distance or a point of the other three-dimensional model located on the perpendicular with respect to the surface of the positive mold. Naturally, a similar consideration can be made (alternatively or in addition) for each point of the three-dimensional model of the thermoformed device (appropriately selected).

Advantageously, the three-dimensional digital models allow identifying the points that make up the surfaces of the objects whose images have been acquired. The distance can then be measured by simply comparing the coordinates in the space of the corresponding points that make up the surfaces in the two models.

Preferably, the alignment step consists in superimposing the reference targets present in both three-dimensional digital models.

In this way, it is advantageously ensured that the two three-dimensional digital models are perfectly aligned before obtaining the distance point by point between them as indicated above.

Preferably, the images of the device obtained by thermoforming in configuration fitted on the positive mold and/or the images of the positive mold are acquired by means of an optical scanner.

As an alternative or in combination, the images of the device obtained by thermoforming in configuration fitted on the positive mold and/or the images of the positive mold are acquired by means of a laser scanner.

Preferably, the device obtained by thermoforming is an orthodontic dental device and the positive mold is a model of a dental arch.

More preferably, the dental orthodontic device is a transparent orthodontic mask which can be fitted on a dental arch.

From the patent document published as US2016175068A1, a method is known for generating tooth arrangements , including the steps of receiving a digital model representing an initial tooth arrangement; determining K orthodontic treatment step parameters which represent the number of orthodontic treatment steps for moving the initial tooth arrangement to an expected tooth arrangement, for each orthodontic treatment step parameter, generating a group of digital models representing a tooth arrangement set corresponding to the orthodontic treatment step parameter, thereby obtaining K groups of digital models, and selecting one group from the K groups of digital models that represents a best tooth arrangement set.

From the patent document published as EP2991034A1 is known a method related to inspecting uncured fiber-reinforced composite components by non-contact 3D measurements of the component using 3D digital image correlation with patterned illumination, the method comprising the steps of projecting a light pattern onto a form, acquiring a baseline 3D profile of the form by imaging the light pattern on the form, laying an uncured fiber piece onto the form, projecting the light pattern onto the uncured fiber piece, acquiring a test 3D profile of the fiber piece by imaging the light pattern on the uncured fiber piece, and computing a thickness difference between the test 3D profile and the baseline 3D profile. According to such solution, which relates to systems and methods to be used for inspecting components during their fabrication, there is no need to align the 3D images as they are captured while the form is kept in position during production; in fact, according to such solution, the form is fixed and not moved.

The method for measuring the thickness according to the invention is particularly advantageous with reference to the production of masks for orthodontic treatment plans. In fact, the speed of application of the method without having to give up a high accuracy of measurement, goes particularly well with the large number of masks that make up a set necessary for a complete treatment plan, making the quality control step following the production of the masks particularly fast, but still reliable.

Further features and advantages of the present invention will appear more clearly from the following detailed description of some preferred embodiments thereof, made with reference to the accompanying drawings.

The different features in the single configurations may be combined with one another as desired according to the description above, to make use of the advantages resulting in a specific way from a particular combination.

In such drawings,
- figure 1 is a block diagram of an embodiment of the method for measuring the thickness of thermoformed devices according to the present invention;
- figures 2a and 2b are axonometric views, respectively, of an assembly consisting of a mold and a corresponding device obtained by a thermoforming process on said mold fitted thereon and of the mold alone.

In the following description, identical reference numerals or symbols are used for the illustration of the figures to indicate construction elements having the same function. Moreover, for clarity of illustration, some references may be not repeated in all the figures.

The method for measuring the thickness of thermoformed devices will be described below in illustrative and non-limiting terms, with particular reference to the measurement of the thickness of a transparent orthodontic mask. However, the same thickness measurement method is applicable for measuring the thickness of any object obtained by thermoforming.

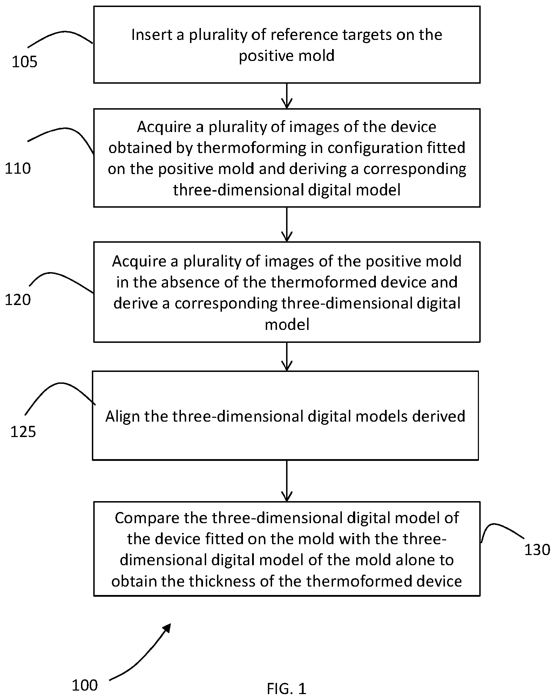

With reference to figure 1, an embodiment of the method for measuring the thickness of a device obtained by thermoforming according to the present invention, indicated as a whole by 100, is shown.

The measuring method 100 comprises a first step 110 in which a plurality of images of the positive mold 10 used in the thermoforming of the device with the thermoformed device 20 itself fitted thereon, which in the case in figure 2a is an orthodontic mask, is acquired, and a corresponding three-dimensional digital model is derived.

During the following step 120, the three-dimensional digital model of the positive mold 10 (illustrated in figure 2b) is derived in the absence of the mask 20, also in this case through the acquisition of a plurality of corresponding images.

It should be noted that steps 110 and 120 can be inverted with equivalent result.

There are three acquisition options; according to the first option, the mold 10 is acquired then thermoformed and finally the mask 20 fitted onto the mold 10 is acquired; according to the second option, the mask 20 fitted onto the mold 10 is thermoformed and then acquired, then the mask 20 is removed from the mold 10 and finally the mold 10 is acquired; according to the third (preferred) option, the mask 20 is thermoformed and then is removed from the mold 10, then the mold 10 is acquired, then the mask 20 is fitted onto the mold 10 and finally the mask 20 fitted onto the mold 10 is acquired.

In steps 110 and 120, only outer surfaces are acquired, i.e. not surfaces of inner parts of the mold 10 and of the device 20; it is specified that "inner" and "outer" does not refer to the position with respect to a hypothetical "oral cavity", but refers to the position with respect to the perimeter of the body considered.

In steps 110 and 120, only upper surfaces are acquired, because the positive mold is positioned with the teeth facing upwards.

The derivation of three-dimensional digital models can also be made a long time after the acquisition of the images, for example just before the comparison of the models themselves.

The following step 130 provides that the thickness (for example "whole field", that is, on a whole surface) is obtained by calculating point by point the distances between the two three-dimensional digital models. Specifically, the coordinates in the space of the corresponding points that make up the surfaces in the two models are compared. For each point of the surface defined by the digital model of the positive mold 10, the point closest to it belonging to the surface defined by the model of the assembly consisting of the mold 10 and the device 20 fitted on the same 10 is located. In this way, the distance between the two points in the space and therefore the thickness of the object fitted is obtained.

The step of calculating 130 the thickness through the evaluation of the distances between the corresponding points in the two three-dimensional digital models respectively relative to the mold 10, with and without the mask 20 fitted, requires that these models are perfectly aligned.

It should be noted that for each point of the three-dimensional model of the mold 10 (appropriately selected), we can consider, for example, a point of the three-dimensional model of the mask 20 having minimum distance or a point of the three-dimensional model of the mask 20 located on the perpendicular with respect to the surface of the mold 10. Naturally, a similar consideration can be made (alternatively or in addition) for each point of the three-dimensional model of the mask 20 (appropriately selected).

A step 105 for inserting reference targets onto the positive mold 10 is provided before the image acquisition steps and consequent derivation of the three-dimensional digital models 110 and 120.

Subsequently to the acquisition and derivation steps 110 and 120, but before the step of calculation of the distances 130, an alignment step 125 of the three-dimensional digital models obtained takes place, performed by superimposing the reference targets present in both models derived from the acquired images.

The features of the method for measuring the thickness of devices obtained by thermoforming object of the present invention as well as the relevant advantages are clear from the above description.

Additional variants of the embodiments described above are possible without departing from the teaching of the invention.

Finally, it is clear that several changes and variations may be made to the method for measuring the thickness of devices obtained by thermoforming thus conceived, all falling within the invention as defined by the claims. In the practice, the materials used as well as the sizes, can be whatever, according to the technical requirements.

## Claims

1. Method (100) for measuring the thickness of devices (20) obtained by thermoforming a sheet of thermoplastic material on a positive mold (10) **characterized in that** it comprises the steps consisting of:
- inserting (105) a plurality of reference targets onto the positive mold (10), prior to the image acquisition and model derivation steps (110,120);
- acquiring (110) a plurality of images of the device (20) obtained by thermoforming in configuration fitted on the positive mold (10) and deriving therefrom a three-dimensional digital model of the assembly consisting of the positive mold (10) and the device (20) obtained by thermoforming fitted on the same (10);
- acquiring (120) a plurality of images of the positive mold (10) in the absence of the fitted thermoformed device (20) and deriving therefrom a three-dimensional digital model of the positive mold (10) alone;
- aligning (125) the acquired three-dimensional digital models; and subsequently
- comparing (130) the aligned three-dimensional digital models and calculating thicknesses of the thermoformed device (20) on the basis of the differences detected by the comparison.

2. Method (100) for measuring the thickness according to claim 1, wherein said acquisition steps refer to images only of outer surfaces, typically upper surfaces.

3. Method (100) for measuring the thickness according to claim 1 or 2, wherein the comparison step (130) between the two three-dimensional digital models comprises obtaining point by point distances which are present between the two models, said thicknesses of the device (20) coinciding with the distances obtained.

4. Method (100) for measuring the thickness according to any one of the preceding claims, wherein the alignment step (125) consists in superimposing the reference targets present in both three-dimensional digital models.

5. Method (100) for measuring the thickness according to any one of the preceding claims, wherein the images of the device obtained by thermoforming in configuration fitted on the positive mold and/or the images of the positive mold are acquired by means of an optical scanner.

6. Method (100) for measuring the thickness according to any one of the preceding claims, wherein the images of the device obtained by thermoforming in configuration fitted on the positive mold and/or the images of the positive mold are acquired by means of a laser scanner.

7. Method (100) for measuring the thickness according to any one of the preceding claims, wherein the device (20) obtained by thermoforming is an orthodontic dental device and the positive mold (10) is a model of a dental arch.

8. Method (100) for measuring the thickness according to claim 7, wherein the orthodontic dental device (20) is a transparent orthodontic mask.

## Patentansprüche

1. Verfahren (100) zum Messen der Dicke von Vorrichtungen (20), die durch Thermoformen einer Folie aus thermoplastischem Material auf einer Positivform (10) erhalten werden, **dadurch gekennzeichnet, dass** es die folgenden Schritte umfasst:
- Einsetzen (105) einer Vielzahl von Referenzzielen auf die Positivform (10) vor den Schritten zur Bilderfassung und Modellableitung (110,120);
- Erfassen (110) einer Vielzahl von Bildern der durch Thermoformen erhaltenen Vorrichtung (20) in einer Konfiguration, in der sie auf der Positivform (10) aufgesetzt ist, und Ableiten daraus eines dreidimensionalen digitalen Modells der Baugruppe, die aus der Positivform (10) und der durch Thermoformen erhaltenen Vorrichtung (20) besteht, die auf derselben (10) aufgesetzt ist;
- Erfassen (120) einer Vielzahl von Bildern der Positivform (10) in Abwesenheit der aufgesetzten thermogeformten Vorrichtung (20) und Ableiten daraus eines dreidimensionalen digitalen Modells der Positivform (10) allein;
- Ausrichten (125) der erfassten dreidimensionalen digitalen Modelle; und anschließend
- Vergleichen (130) der ausgerichteten dreidimensionalen digitalen Modelle und Berechnen der Dicken der thermogeformten Vorrichtung (20) auf der Grundlage der durch den Vergleich erfassten Differenzen.

2. Verfahren (100) zum Messen der Dicke nach Anspruch 1, wobei sich die Erfassungsschritte nur auf Bilder von äußeren Oberflächen, typischerweise oberen Oberflächen, beziehen.

3. Verfahren (100) zum Messen der Dicke nach Anspruch 1 oder 2, wobei der Vergleichsschritt (130) zwischen den zwei dreidimensionalen digitalen Modellen das Erhalten von Punkt-für-Punkt-Abständen umfasst, die zwischen den zwei Modellen vorhanden sind, wobei die Dicken der Vorrichtung (20) mit den erhaltenen Abständen übereinstimmen.

4. Verfahren (100) zum Messen der Dicke nach einem der vorhergehenden Ansprüche, wobei der Ausrichtungsschritt (125) darin besteht, die in den beiden dreidimensionalen digitalen Modellen vorhandenen Referenzziele zu überlagern.

5. Verfahren (100) zum Messen der Dicke nach einem der vorhergehenden Ansprüche, wobei die Bilder der durch Thermoformen erhaltene Vorrichtung in der auf die Positivform aufgesetzten Konfiguration und/oder die Bilder der Positivform mittels eines optischen Scanners erfasst werden.

6. Verfahren (100) zum Messen der Dicke nach einem der vorhergehenden Ansprüche, wobei die Bilder der durch Thermoformen erhaltene Vorrichtung in der auf die Positivform aufgesetzten Konfiguration und/oder die Bilder der Positivform mittels eines Laserscanners erfasst werden.

7. Verfahren (100) zum Messen der Dicke nach einem der vorhergehenden Ansprüche, wobei die durch Thermoformen erhaltene Vorrichtung (20) eine kieferorthopädische Dentalvorrichtung ist und die Positivform (10) ein Modell eines Zahnbogens ist.

8. Verfahren (100) zum Messen der Dicke nach Anspruch 7, wobei die kieferorthopädische Dentalvorrichtung (20) eine transparente kieferorthopädische Maske ist.

## Revendications

1. Procédé (100) de mesure de l'épaisseur de dispositifs (20) obtenus par thermoformage d'une feuille de matière thermoplastique sur un moule positif (10) **caractérisé en ce qu'**il comprend les étapes suivantes :
- insérer (105) une pluralité de cibles de référence sur le moule positif (10), avant les étapes d'acquisition d'images et de dérivation de modèles (110, 120) ;
- acquérir (110) une pluralité d'images du dispositif (20) obtenu par thermoformage en configuration ajustée sur le moule positif (10) et en déduire un modèle numérique tridimensionnel de l'ensemble constitué du moule positif (10) et du dispositif (20) obtenu par thermoformage ajusté sur celui-ci (10) ;
- acquérir (120) une pluralité d'images du moule positif (10) en l'absence du dispositif thermoformé ajusté (20) et en déduire un modèle numérique tridimensionnel du moule positif (10) seul ;
- aligner (125) les modèles numériques tridimensionnels acquis ; et ensuite
- comparer (130) les modèles numériques tridimensionnels alignés et calculer les épaisseurs du dispositif thermoformé (20) sur la base des différences détectées par la comparaison.

2. Procédé (100) de mesure de l'épaisseur selon la revendication 1, dans lequel lesdites étapes d'acquisition se réfèrent à des images uniquement des surfaces extérieures, typiquement des surfaces supérieures.

3. Procédé (100) de mesure de l'épaisseur selon la revendication 1 ou 2, dans lequel l'étape de comparaison (130) entre les deux modèles numériques tridimensionnels comprend l'obtention des distances point par point qui sont présentes entre les deux modèles, lesdites épaisseurs du dispositif (20) coïncidant avec les distances obtenues.

4. Procédé (100) de mesure de l'épaisseur selon l'une quelconque des revendications précédentes, dans lequel l'étape d'alignement (125) consiste à superposer les cibles de référence présentes dans les deux modèles numériques tridimensionnels.

5. Procédé (100) de mesure de l'épaisseur selon l'une quelconque des revendications précédentes, dans lequel les images du dispositif obtenu par thermoformage en configuration ajustée sur le moule positif et/ou les images du moule positif sont acquises au moyen d'un scanner optique.

6. Procédé (100) de mesure de l'épaisseur selon l'une quelconque des revendications précédentes, dans lequel les images du dispositif obtenu par thermoformage en configuration ajustée sur le moule positif et/ou les images du moule positif sont acquises au moyen d'un scanner laser.

7. Procédé (100) de mesure de l'épaisseur selon l'une quelconque des revendications précédentes, dans lequel le dispositif (20) obtenu par thermoformage est un dispositif dentaire orthodontique et le moule positif (10) est un modèle d'arcade dentaire.

8. Procédé (100) de mesure de l'épaisseur selon la revendication 7, dans lequel le dispositif dentaire orthodontique (20) est un masque orthodontique transparent.
